# EUROPÄISCHE PATENTSCHRIFT

(11) **EP 3 399 165 B1**
(45) Veröffentlichungstag und Bekanntmachung des Hinweises auf die Patenterteilung: **11.08.2021**
(21) Anmeldenummer: 18170387.7
(22) Anmeldetag: 02.05.2018
(51) Int. Cl.: F01N 3/021, F01N 13/00

(54) **ABGASANLAGE FÜR EINEN VERBRENNUNGSMOTOR**
EXHAUST SYSTEM FOR AN INTERNAL COMBUSTION ENGINE
SYSTEME D'ECHAPPEMENT POUR UN MOTEUR A COMBUSTION INTERNE

(30) Priorität: 04.05.2017 DE 102017109626
(43) Veröffentlichungstag der Anmeldung: 07.11.2018
(73) Patentinhaber: VOLKSWAGEN AKTIENGESELLSCHAFT, 38440 Wolfsburg (DE)
(72) Erfinder: Car, Onur Ulas, 10115 Berlin (DE)
(74) Vertreter: Gulde & Partner

(56) Entgegenhaltungen:
- EP-A1- 1 515 011
- EP-A1- 2 444 608
- DE-A1-102010 027 984
- DE-A1-102013 209 783
- FR-A1- 3 032 229

## Beschreibung

Die Erfindung betrifft eine Abgasanlage für einen Verbrennungsmotor sowie einen Verfahren zum Betreiben einer solchen Abgasanlage gemäß den Oberbegriffen der unabhängigen Ansprüche.

Die aktuelle und eine zukünftig immer schärfer werdende Abgasgesetzgebung stellen hohe Anforderungen an die motorischen Rohemissionen und die Abgasnachbehandlung von Verbrennungsmotoren. Dabei stellen die Forderungen nach einem weiter sinkenden Verbrauch und die weitere Verschärfung der Abgasnormen hinsichtlich der zulässigen Stickoxid-Emissionen eine Herausforderung für die Motorenentwickler dar. Bei Ottomotoren erfolgt die Abgasreinigung in bekannter Weise über einen Drei-Wege-Katalysator, sowie dem Drei-Wege-Katalysator vor- und nachgeschaltete weitere Katalysatoren. Bei Dieselmotoren finden aktuell Abgasnachbehandlungssysteme Verwendung, welche einen Oxidationskatalysator oder NOx-Speicherkatalysator, einen Katalysator zur selektiven katalytischen Reduktion von Stickoxiden (SCR-Katalysator) sowie einen Partikelfilter zur Abscheidung von Rußpartikeln und gegebenenfalls weitere Katalysatoren aufweisen. Als Reduktionsmittel wird dabei bevorzugt Ammoniak verwendet. Weil der Umgang mit reinem Ammoniak aufwendig ist, wird bei Fahrzeugen üblicherweise eine synthetische, wässrige Harnstofflösung verwendet, die in einer dem SCR-Katalysator vorgeschalteten Mischeinrichtung mit dem heißen Abgasstrom vermischt wird. Durch diese Vermischung wird die wässrige Harnstofflösung erhitzt, wobei die wässrige Harnstofflösung Ammoniak im Abgaskanal freisetzt. Eine handelsübliche, wässrige Harnstofflösung setzt sind im Allgemeinen aus 32,5% Harnstoff und 67,5% Wasser zusammen.

Durch die aktuelle und zukünftige Abgasgesetzgebung kommt es insbesondere bei Kraftfahrzeugen mit Dieselmotoren zu einer zunehmenden Anspannung hinsichtlich der Einhaltung von Stickoxid-Grenzwerten. Bei Abgasnachbehandlungssystemen mit einem motornahen SCR-Katalysator oder NOx-Speicherkatalysator und einem motornahen Dieselpartikelfilter können die aktuellen Anforderungen erfüllt werden, jedoch kommen solche Abgasnachbehandlungssysteme zunehmend an ihre funktionellen Grenzen. Weiterhin verlangen die weiteren Verschärfungen der Abgasnormen nach Volumenvergrößerungen bei den Katalysatoren und dem Volumen des Partikelfilters, einer Reduzierung des Abgasgegendruckes und zusätzlichen Abgassensoren zur verbesserten Regelung und zur Reduzierung der Rohemissionen des Verbrennungsmotors sowie für die On-Board-Diagnose der Abgasnachbehandlungskomponenten. Zur Analyse des Abgases kann stromabwärts des Partikelfilters, insbesondere stromabwärts einer Differenzdruckleitung zu Überwachung der Beladung des Partikelfilters ein zusätzlicher NOx-Sensor angeordnet werden. Dabei können jedoch Kondensattropfen durch den Abgasmassenstrom von der Differenzdruckleitung mitgeschleppt werden und beim Auftreffen auf den Sensor zu einer Fehlfunktion bis hin zum Ausfall des Sensors führen.

Aus der DE 10 2013 215 594 A1 ist ein Abgasanlage für einen Verbrennungsmotor bekannt, wobei an einem Partikelfilter ein Drucksensor vorgesehen ist, wobei eine Anschlussleitung zwischen dem Abgaskanal des Verbrennungsmotors und dem Drucksensor eine Rohrleitung ausgebildet ist. Dabei ist vorgesehen, dass diese Anschlussleitung so ausgebildet ist, dass Kondenzwasser aus der Anschlussleitung in den Abgaskanal fließt, um bei tiefen Temperaturen ein Vereisen der Anschlussleitung zu vermeiden.

Aus der WO 2008 / 042048 A1 ist ein Verfahren zum Thermomanagement in einer Abgasanlage eines Verbrennungsmotors bekannt. Dabei kann der Abgaskanal eine Leitung aufweisen, welche den Ladeluftkühler des Verbrennungsmotors mit dem Abgaskanal verbindet. Dabei kann an dem Ladeluftkühler abgeschiedenes Kondensat zum Thermomanagement der Abgasanlage genutzt werden.

Die EP 2 444 608 A1 offenbart einen Verbrennungsmotor mit einer Abgasanlage, in welcher ein Dieseloxidationskatalysator und stromabwärts des Dieseloxidationskatalysators ein Dieselpartikelfilter angeordnet ist, wobei an dem Partikelfilter ein Differenzdrucksensor angeordnet ist, mit welchem eine Druckdifferenz über den Partikelfilter zur Ermittlung des Beladungszustandes des Partikelfilters messbar ist.

Aus der DE 10 2010 027 984 A1 ist ein Verfahren zum Betreiben einer Abgasanlage eines Verbrennungsmotors bekannt, bei welchem mindestens ein Parameter des im Abgaskanal strömenden Abgases durch einen Abgassensor erfasst wird. Dabei erfolgt ein Abgleich der Abgassonde in einem Betriebszustand des Verbrennungsmotors, bei welchem kein Kraftstoff in die Brennräume des Verbrennungsmotors eingespritzt wird.

Die EP 1 515 011 A1 offenbart eine Abgasnachbehandlungseinheit mit einem Oxidationskatalysator und einem dem Oxidationskatalysator nachgeschalteten Partikelfilter, wobei stromaufwärts und stromabwärts der Abgasnachbehandlungseinheit jeweils ein Drucksensor angeordnet ist, um eine Druckänderung über die Abgasnachbehandlungseinheit zu messen.

Aus der FR 3 032 229 A1 ist ein Verfahren zum Bestimmen der Verschmutzung eines Partikelfilters, welcher in einer Abgasleitung oder in einer Hilfsleitung am Ende einer Abgasleitung angeordnet ist, bekannt. Dabei erfolgt zur Bestimmung der Verschmutzung des Partikelfilters durch eine Differenzdruckmessung über den Partikelfilter.

Darüber hinaus offenbart die DE 10 2013 209 783 A1 ein Verfahren zur Überwachung eines Differenzdrucksensors in einem Abgasnachbehandlungssystem. Dabei wird der Absolutwert der Druckänderung mit einem Schwellendruckwert verglichen, um zu bestimmen, ob der Absolutwert größer oder kleiner als der Schwellendruckwert ist. Bei einem Absolutwert der Druckänderung, welcher größer als der Schwellendruckwert ist, wird auf einen Fehler des Differenzdrucksensors geschlossen.

Nachteilig an den bekannten Lösungen ist jedoch, dass Wasser in Tröpfchenform in den Abgaskanal gelangen kann und somit das Problem einer potenziellen Fehlfunktion oder eines Ausfalls eines Sensors im Abgaskanal, insbesondere eines NOx-Sensors, durch auftreffende Wassertropfen nicht gelöst wird.

Der Erfindung liegt nun die Aufgabe zugrunde, eine Abgasnachbehandlungsvorrichtung für einen Verbrennungsmotor bereitzustellen, ein Eindringen von Wasser in Tropfenform in den Abgaskanal zu vermeiden und somit eine Beschädigung des Sensors im Abgaskanal auszuschließen.

Erfindungsgemäß wird die Aufgabe durch eine Abgasanlage für einen Verbrennungsmotor gelöst, wobei eine Abgasanlage des Verbrennungsmotor mit einem Auslass des Verbrennungsmotors verbunden ist. Die Abgasanlage weist einen Abgaskanal auf, in dem ein Partikelfilter angeordnet ist. Eine Differenzdruckleitung verbindet einen ersten Abschnitt des Abgaskanals stromaufwärts des Partikelfilters und/oder einen zweiten Abschnitt des Abgaskanal stromabwärts des Partikelfilters mit einem Differenzdrucksensor, sodass eine Druckdifferenz über den Partikelfilter ermittelt werden kann, welche ein Maß für die Beladung des Partikelfilters mit Rußpartikeln ist. An einem dem Abgaskanal zugewandten Ende der Differenzdruckleitung ist ein mit dem Abgaskanal fluidisch verbundenes Reservoir ausgebildet, welches in den Abgaskanal vorsteht, wobei das Reservoir durch das Abgas des Verbrennungsmotors derart beheizbar ist, dass im Reservoir gesammelte Flüssigkeit vor dem Austritt in den Abgaskanal verdampft und gasförmig in den Abgaskanal eingebracht wird. Durch das Reservoir kann das Kondensat aufgefangen werden und gesammelt werden, sodass keine Flüssigkeitstropfen durch Kondensat in der Differenzdruckleitung in den Abgaskanal gelangen. Dabei ist das Reservoir in dem Abgaskanal angeordnet, sodass es schnell, einfach und kostengünstig durch das heiße Abgas im Abgaskanal beheizt werden kann und verdampft. Das verdampfte Kondensat kann dann unproblematisch in den Abgaskanal eingebracht werden, da hierbei keine Tropfenbildung mehr zu erwarten ist und das Gas zu keiner Beschädigung der Sensoren führt. Dabei kann das Reservoir sowohl an einem ersten Abschnitt der Differenzdruckleitung angeordnet sein, welches den Abgaskanal stromaufwärts des Partikelfilters mit dem Differenzdrucksensor verbindet, als auch an einem zweiten Abschnitt der Differenzdruckleitung, welche den Abgaskanal stromabwärts des Partikelfilters mit dem Differenzdrucksensor verbindet.

Durch die in den abhängigen Ansprüchen aufgeführten Merkmale sind vorteilhafte Verbesserungen und Weiterentwicklungen der im unabhängigen Anspruch angegebenen Abgasanlage möglich.

In bevorzugter Ausgestaltung der Erfindung ist vorgesehen, dass in der Abgasanlage stromabwärts des Reservoirs ein Sensor, insbesondere ein NOx-Sensor zur Bestimmung der Stickoxidkonzentration, ein Temperatursensor und/oder ein Partikelsensor angeordnet ist. Bei Abgasanlagen zur motornahen Abgasreinigung von Dieselmotoren sind ein motornaher Oxidationskatalysator oder ein NOx-Speicherkatalysator und ein Partikelfilter, vorzugsweise ein Partikelfilter mit einer Beschichtung zur selektiven, katalytischen Reduktion von Stickoxiden, vorgesehen. Dabei ist stromabwärts des Partikelfilters und stromabwärts der Einmündung der Differenzdruckleitung ein NOx-Sensor vorgesehen, mit welchem die nach der Abgasreinigung verbleibende Konzentration an Stickoxiden gemessen werden kann. Um eine Beschädigung dieses Sensors durch das Aufschlagen von Flüssigkeitstropfen, insbesondere von kondensiertem Wasser aus der Differenzdruckleitung, zu vermeiden, ist an dem dem Abgaskanal zugewandten Ende der Differenzdruckleitung, insbesondere an dem zweiten Abschnitt der Differenzdruckleitung, ein Reservoir vorgesehen, um das Eindringen von Flüssigkeit in den Abgaskanal stromabwärts des Partikelfilters zu vermeiden.

Erfindungsgemäß ist vorgesehen, dass an dem Reservoir eine Öffnung oder ein Schlitz zur kontrollierten Abgabe der in dem Reservoir gesammelten Flüssigkeit in den Abgaskanal ausgebildet ist. Primär hat die Öffnung oder der Schlitz die Funktion, eine fluidische Verbindung zwischen der Differenzdruckleitung und dem Abgaskanal herzustellen, um eine Druckmessung zu ermöglichen. Zusätzlich kann dieser Schlitz oder diese Öffnung genutzt werden, damit das Kondensat nach dem Verdampfen kontrolliert in den Abgaskanal eingebracht werden kann. Dadurch wird verhindert, dass das Kondensat unkontrolliert in den Abgaskanal tropft.

Dabei ist erfindungsgemäß vorgesehen, dass die Öffnung oder der Schlitz derart angeordnet sind, dass ein Flüssigkeit durch die Schwerkraft an einem Austritt aus der Öffnung oder dem Schlitz gehindert wird, ein gasförmiges Medium jedoch durch die Öffnung oder den Schlitz in den Abgaskanal entweichen kann. Durch ein verschlossenes Ende des Reservoirs, welches durch die Schwerkraft mit dem Kondensat befüllt wird, kann das Kondensat gesammelt werden, ohne in den Abgaskanal zu tropfen. Dabei ist an dem Reservoir eine Öffnung oder ein Schlitz vorgesehen, welcher geodätisch oberhalb des verschlossenen Endes liegt und somit eine Abgabe des Kondensates an den Abgaskanal erst dann erlaubt, wenn das Kondensat verdampft ist und aufgrund der Druckgefälles in den Abgaskanal abgegeben wird. Dabei liegt die Öffnung oder der Schlitz an einer in Strömungsrichtung des Abgases durch den Abgaskanal dem Abgasstrom abgewandten Seite des Reservoirs, um ein Eindringen von Abgas in das Reservoir zu vermeiden.

In weiterer bevorzugter Ausgestaltung der Erfindung ist vorgesehen, dass an dem Reservoir eine Abrisskante ausgebildet ist, welche ein Anliegen eines Volumenstroms der aus dem Reservoir an einer Wand des Abgaskanals verhindert. Dadurch kann insbesondere bei einem kalten Abgaskanal nach einem Kaltstart des Verbrennungsmotors verhindert werden, dass die Flüssigkeit wieder an der Wand des Abgaskanal kondensiert und somit wieder Flüssigkeitstropfen in dem Abgaskanal stromabwärts des Partikelfilters vorhanden sind. Zudem können lokale Konzentrationen der Flüssigkeit vermieden werden, welche ansonsten die Funktion oder Dauerhaltbarkeit eine stromabwärts des Partikelfilters angeordnete Komponente zur Abgasnachbehandlung einschränken könnte.

Gemäß einer weiteren Verbesserung der Abgasanlage ist mit Vorteil vorgesehen, dass das stromabwärtige Ende der Differenzdruckleitung in einen Abgastrichter unmittelbar stromabwärts eines Filterkörpers des Partikelfilters mündet. Dadurch ist eine besonders kompakte Ausführungsform der erfindungsgemäßen Abgasanlage möglich, zudem wird durch den Trichter der Staudruck stromabwärts des Partikelfilters minimiert, wodurch eine verbesserte Bestimmung des Beladungszustands des Partikelfilters möglich ist.

In einer bevorzugten Ausführungsform der Erfindung ist vorgesehen, dass die Differenzdruckleitung stromaufwärts einer Verzweigung für eine Niederdruck-Abgasrückführung aus dem Abgaskanal abzweigt und stromabwärts der Verzweigung für die Niederdruck-Abgasrückführung wieder in den Abgaskanal einmündet. Durch eine Einmündung der Differenzdruckleitung stromabwärts der Niederdruck-Abgasrückführung kann durch den NOx-Sensor eine besonders exakte Aussage über den Restgehalt an Stickoxiden getroffen werden, da stromabwärts der Einmündung der Differenzdruckleitung keine weitere Abgasrückführung erfolgt. Somit entspricht die gemessene Stickoxid-Konzentration an dem NOx-Sensor den Endrohremissionen oder dein Eingangsemissionen einer weiteren Komponente zur Abgasnachbehandlung im Abgaskanal stromabwärts des Partikelfilters, welche vorzugsweise in Unterbodenlage eines Kraftfahrzeuges angeordnet ist.

Gemäß einer weiteren, vorteilhaften Verbesserung der Erfindung ist vorgesehen, dass das Reservoir durch ein Blech ausgebildet ist. Besonders einfach und kostengünstig lässt sich das Reservoir durch ein Blech ausbilden. Dabei kann in einem einfachen Fertigungsverfahren, beispielsweise durch einen Stanzprozess oder einen Stanz-Biege-Prozess ein Schlitz oder eine Öffnung in das Blech eingebracht werden und die Geometrie des Blechs erzeugt werden. Ferner kann ein Schlitz auch durch die Formgebung des Bleches ausgebildet werden.

Bevorzugt ist dabei, wenn das Blech in den Abgaskanal eingeschraubt ist. Durch ein Einschrauben des Blechs in den Abgaskanal kann eine besonders einfache Montage erfolgen. Dabei bildet das vorzugsweise in einem Biege- oder Tiefziehprozess umgeformte Blech das Reservoir aus, welches auf einfache Art und Weise in den Abgaskanal eingeschraubt werden kann. Dabei wird die Montage durch einen Abgastrichter stromabwärts des Filterkörpers des Partikelfilters erleichtert, da durch den gegenüber dem restlichen Abgaskanal vergrößerten Durchmesser eine einfachere Montage möglich ist.

Alternativ ist mit Vorteil vorgesehen, wenn das Blech formschlüssig und/oder kraftschlüssig mit der Differenzdruckleitung verbunden ist. Durch eine Verbindung des Blechs mit der Differenzdruckleitung kann das Reservoir durch eine Anschlussöffnung für die Differenzdruckleitung eingesetzt werden und somit als Baugruppe mit der Differenzdruckleitung vormontiert werden. Dadurch wird die Montage des Abgaskanals erleichtert.

In einer weiteren Verbesserung der Erfindung ist vorgesehen, dass der Sensor im Abgaskanal, insbesondere der NOx-Sensor, der Temperatursensor oder der Partikelsensor, in einem Abstand von 120mm bis 1500mm stromabwärts des Filterkörpers des Partikelfilters abgeordnet ist. Durch den NOx-Sensor soll eine Stickoxid-Konzentration im Abgaskanal stromabwärts des Partikelfilters bestimmt werden. Um eine möglichst kompakte Bauweise zu erzielen und gegebenenfalls Platz für weitere Komponenten der Abgasnachbehandlung stromabwärts des Partikelfilters bereitzustellen ist es vorteilhaft, wenn der NOx-Sensor in einem Abstand von 120mm bis 1500mm besonders bevorzugt zwischen 120mm und 250mm stromabwärts des Filterkörpers des Partikelfilters angeordnet ist. Dabei wird durch das Verdampfen der Flüssigkeit im Reservoir erreicht, dass trotz des kurzen Abstands zwischen Filterkörper und NOx-Sensor ein Auftreffen von Kondensattropfen auf dem NOx-Sensor vermieden wird.

Erfindungsgemäß wird ein Verfahren zur Abgasnachbehandlung eines Verbrennungsmotors vorgeschlagen, wobei das Abgas des Verbrennungsmotors durch eine Abgasanlage mit einem Abgaskanal geleitet wird. Dabei wird das Abgas des Verbrennungsmotors durch einen Partikelfilter gereinigt. An der Abgasanlage ist eine Differenzdruckleitung vorgesehen ist, welche einen ersten Abschnitt des Abgaskanals stromaufwärts des Partikelfilters und/oder einen zweiten Abschnitt des Abgaskanals stromabwärts des Partikelfilters mit einem Differenzdrucksensor verbindet. An einem dem Abgaskanal zugewandten Ende der Differenzdruckleitung ist ein mit dem Abgaskanal fluidisch verbundenes Reservoir ausgebildet, welches in den Abgaskanal ragt, wobei das Reservoir durch das Abgas des Verbrennungsmotors derart beheizt wird, dass eine im Reservoir gesammelte Flüssigkeit vor dem Austritt in den Abgaskanal verdampft und gasförmig in den Abgaskanal eingebracht wird. Durch das erfindungsgemäße Verfahren kann vermieden werden, dass Kondensat aus der Differenzdruckleitung in flüssiger Form in den Abgaskanal gelangt und dort zu einer Störung eines Sensors oder einer Komponente der Abgasnachbehandlung führt.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den Figuren mit gleichen Bezugszeichen gekennzeichnet. Es zeigen:
- Figur 1: ein Ausführungsbeispiel einen Verbrennungsmotors mit einer erfindungsgemäßen Abgasanlage in einer schematischen Darstellung;
- Figur 2: ein erfindungsgemäße Abgasanlage für einen Verbrennungsmotor in einer dreidimensionalen Darstellung;
- Figur 3: einen dem Abgaskanal zugewandten Endabschnitt einer Differenzdruckleitung mit einem Reservoir;
- Figur 4: eine weitere Darstellung eines Abschnitts einer erfindungsgemäßen Abgasanlage;
- Figur 5: einen Abschnitt einer erfindungsgemäßen Abgasanlage, welche den Partikelfilter sowie einen stromabwärts des Partikelfilters anschließenden Abschnitt des Abgaskanals zeigt;
- Figur 6: einen erfindungsgemäße Abgasanlage mit einem Partikelfilter und einer Differenzdruckleitung in einer dreidimensionalen Darstellung.

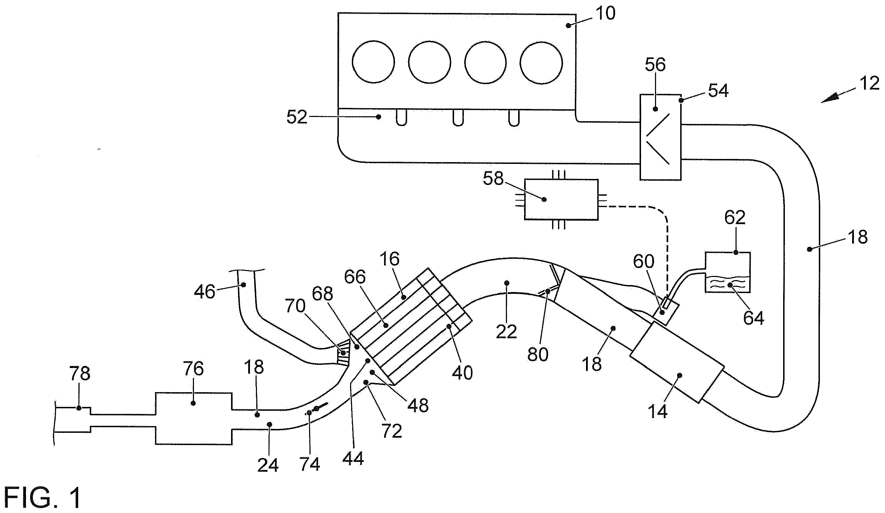

Figur 1 zeigt ein Ausführungsbeispiel eines Verbrennungsmotors 10 mit einer erfindungsgemäßen Abgasanlage 12. Der Verbrennungsmotor 10 ist vorzugsweise als durch Kompression selbstzündender Dieselmotor ausgeführt. Alternativ kann der Verbrennungsmotor 10 auch als mittels einer Zündvorrichtung fremdgezündeter Ottomotor, insbesondere als Ottomotor mit Kraftstoffdirekteinspritzung, ausgeführt sein. Der Verbrennungsmotor 10 weist einen Auslass 52 auf, welcher mit der Abgasanlage 12 verbunden ist. Die Abgasanlage 12 umfasst einen ersten Katalysator 14, vorzugsweise eine Diesel-Oxidationskatalysator oder einen NOx-Speicherkatalysator, und einen stromabwärts des ersten Katalysators 14 angeordneten Partikelfilter 16, welcher vorzugsweise eine Beschichtung 66 zur selektiven katalytischen Reduktion von Stickoxiden (SCR-Beschichtung) aufweist. Die Abgasanlage 12 weist ferner einen Abgaskanal 18 auf, welcher den Auslass 52 mit einem Endrohr 78 der Abgasanlage 12 verbindet. Dabei verbindet ein erster Abschnitt 22 des Abgaskanals 18 den Auslass 52 des Verbrennungsmotors 10 mit dem Partikelfilter 16. In diesem ersten Abschnitt 22 ist vorzugsweise stromabwärts des Auslasses 52 und stromaufwärts des ersten Katalysators 14 eine Turbine 56 eines Abgasturboladers 54 angeordnet. Ferner ist in dem ersten Abschnitt 22 des Abgaskanals 18 ein Dosierelement 60 zur Eindosierung eines in einem Reduktionsmitteltank 62 bevorrateten Reduktionsmittels 64, insbesondere von wässriger Harnstofflösung, angeordnet.

Der Partikelfilter 16 weist einen Einlass und zwei Auslässe auf. Dabei ist der erste Auslass des Partikelfilters 16 mit einer Niederdruck-Abgasrückführung 46 verbunden, über welche der Frischluft stromaufwärts eines von der Turbine 56 angetriebenen Verdichters des Abgasturboladers 54 Abgas beigemischt werden kann, um die Rohemissionen bei der Verbrennung des Kraftstoff-Luft-Gemischs in den Brennräumen des Verbrennungsmotors 10 abzusenken. Der zweite Auslass des Partikelfilters 16 ist mit einem zweiten Abschnitt 24 des Abgaskanals 18 der Abgasanlage 12 verbunden, welcher auch als Hauptkanal bezeichnet wird. Der zweite Abschnitt 24 des Abgaskanals 18 verbindet den Partikelfilter 16 mit dem Endrohr 78 der Abgasanlage 12. In dem Hauptkanal, insbesondere in einer Unterbodenlage eines Kraftfahrzeuges, in welchem ein Verbrennungsmotors 10 mit einer erfindungsgemäßen Abgasanlage 12 verbaut ist, kann ein weiterer Katalysator 76, insbesondere ein weiterer Katalysator zur selektiven katalytischen Reduktion von Stickoxiden, angeordnet sein, um eine zusätzliche Abgasreinigung zu ermöglichen. Alternativ kann der weitere Katalysator 76 auch das Temperaturfenstern vergrößern, in welchem zumindest eine der beiden Abgasnachbehandlungskomponenten 18, 76 zur selektiven katalytischen Reduktion von Stickoxiden eine effiziente Umsetzung von Stickoxiden ermöglicht.

Vorzugsweise sind der erste Katalysator 14 und der Partikelfilter 16 jeweils motornah angeordnet. Unter einer motornahen Anordnung ist in diesem Zusammenhang eine Anordnung mit einer Abgaslauflänge von maximal 80 cm, vorzugsweise von maximal 60 cm, ab dem Auslass 52 des Verbrennungsmotors 10 zu verstehen. Dabei ist zu beachten, dass für den Fall einer Ausführung des Partikelfilter 16 mit einer SCR-Beschichtung 66 zwischen dem ersten Katalysator 14 und dem Partikelfilter 16 eine hinreichend lange Mischstrecke zur Vermischung des in den Abgaskanal 18 eindosierten Reduktionsmittels 64 mit dem Abgas vor Eintritt in den Partikelfilter 16 gegeben ist. Um die Länge der Mischstrecke zu verkürzen weist der Abschnitt des Abgaskanals 18 zwischen dem ersten Katalysator 14 und dem Partikelfilter 16 eine Biegung von ca. 60° auf, wodurch es aufgrund der Umlenkung zu einer Verwirbelung des Abgases kommt, und somit das Reduktionsmittel 64 auf vergleichsweise kurzer Mischstrecke gleichmäßig im Abgaskanal 18 verteilt wird. Zudem kann der Abschnitt des Abgaskanals 18 ein Mischelement 80 aufweisen, um die Durchmischung des Abgasstroms mit dem Reduktionsmittel 64 weiter zu verbessern. An dem Partikelfilter 16 ist in Strömungsrichtung eines Abgases durch den Partikelfilter 16 stromabwärts des Filterkörpers 40 eine Verzweigung 44 ausgebildet, an der sich der Abgaskanal 18 in eine Niederdruck-Abgasrückführung 46 und einen Hauptkanal, welcher den Partikelfilter 16 mit dem Endrohr 78 der Abgasanlage 12 verbindet, verzweigt. Dazu weist der Partikelfilter 16 stromabwärts des Filterkörpers 40 einen Abgastrichter 48 auf, welcher sich in einen zweiten Trichter 68 und einen dritten Trichter 72 verzweigt. Dabei ist der zweiten Trichter 68 mit der Niederdruck-Abgasrückführung 46 verbunden. Zudem trägt der zweite Trichter 68 ein Filterelement 70, um das Eindringen von Rußpartikeln in die Niederdruck-Abgasrückführung 46 zu verhindern. Der dritte Trichter 72 weist einen größeren Durchmesser als der zweite Trichter 68 auf und verbindet den Partikelfilter 16 mit dem Hauptkanal der Abgasanlage 12.

Durch die zunehmende Verschärfung der Abgasgesetzgebung, insbesondere in Bezug auf die Stickoxid-Emissionen, ist es notwendig, innermotorische Maßnahmen und Maßnahmen zur Abgasnachbehandlung zu verbinden. Eine Möglichkeit, die Rohemissionen des Verbrennungsmotors 10 zu verbessern, besteht darin, der Frischluft Abgas zuzumischen, um die Bildung von Stickoxid-Emissionen zu verringern. Dabei ist es vorteilhaft, wenn das zurückgeführte Abgas möglichst kühl ist. Aus diesem Grund kann in der Niederdruck-Abgasrückführung 46 ein Niederdruck-Abgasrückführungs-Kühler angeordnet sein. In dem Hauptkanal der Abgasanlage 12 kann zusätzlich eine Abgasklappe 74 angeordnet sind, mit welcher die der Niederdruck-Abgasrückführung 46 zugeführt Abgasmenge beeinflusst werden kann.

Der Verbrennungsmotor 10 umfasst ferner ein Steuergerät 58, mit welchem die den Brennräumen des Verbrennungsmotors 10 zugeführte Kraftstoffmenge gesteuert oder geregelt wird. Ferner wird über das Steuergerät 58 die erfindungsgemäße Abgasanlage angesteuert und beispielsweise die Menge des in den Abgaskanal 18 eindosierten Reduktionsmittels 56 oder die Regeneration des Partikelfilters 16 gesteuert.

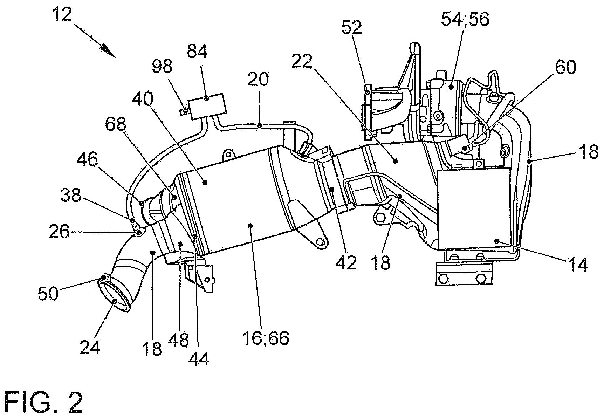

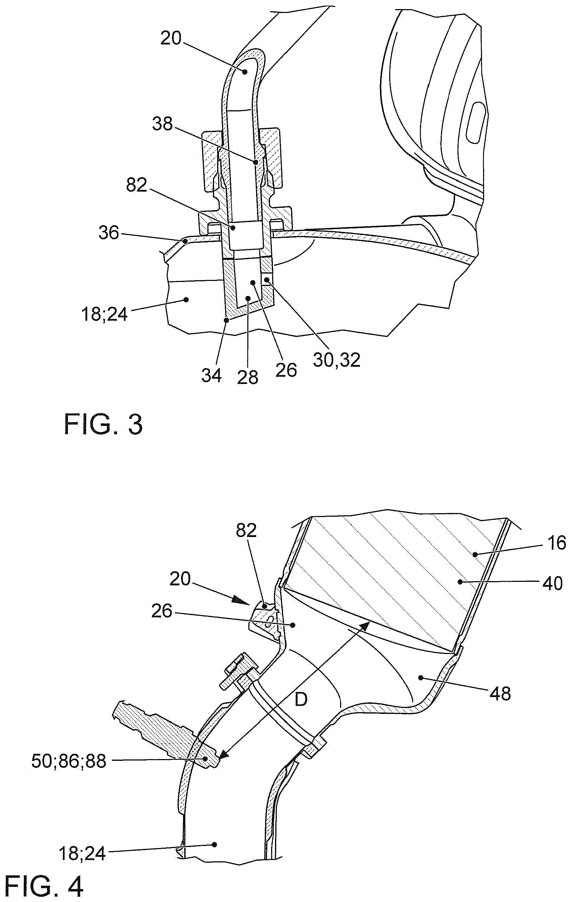

In Figur 2 ist die erfindungsgemäße Abgasanlage 12 eines Verbrennungsmotor 10 in einer dreidimensionalen Darstellung gezeigt. Durch die erfindungsgemäße Abgasanlage 12 kann ein minimaler Abgasgegendruck bei einer kompakten und platzsparenden Bauweise realisiert werden. Dabei weist die Abgasanlage 12 einen unmittelbar im Anschluss an den Auslass 52 des Verbrennungsmotors 10 angeordneten Abgasturbolader 54 auf, dessen Turbine 56 von einem Abgas des Verbrennungsmotors 10 angetrieben wird. Die Abgasanlage 12 weist eine Differenzdruckleitung 20 auf, welche den ersten Abschnitt 22 des Abgaskanals 18 stromaufwärts des Partikelfilters 16 über einen ersten Abschnitt 90 der Differenzdruckleitung 20 mit einem ersten Eingang 94 eines Differenzdrucksensor 84 verbindet. Ein zweiter Abschnitt 24 des Abgaskanals 18 ist über einen zweiten Abschnitt 92 der Differenzdruckleitung 20 mit einem zweiten Eingang 96 des Differenzdrucksensors 84 verbunden. Der Differenzdrucksensor 84 weist ferner eine elektrische Kontaktierung 98 auf, mit welcher das ermittelte Drucksignal an das Steuergerät 58 weitergegeben und dort verarbeitet werden kann. An dem stromabwärtigen Ende 38 der Differenzdruckleitung 20 ist ein Reservoir 26 ausgebildet, in welchem sich in der Differenzdruckleitung 20 entstehendes Kondensat ansammeln kann. Stromabwärts des Partikelfilters 16 und stromabwärts der Einmündung der Differenzdruckleitung 20 ist ein NOx-Sensor 50 vorgesehen. Das stromabwärtige Ende 38 der Differenzdruckleitung ist in Figur 3 genauer visualisiert.

Figur 3 zeigt das dem Abgaskanal 18 zugewandte, stromabwärtige Ende 38 der Differenzdruckleitung 20. Die Differenzdruckleitung 20 ist mittels eines Anschlussstutzens 82 an der Wand 36 dem Abgaskanal 18 befestigt. An dem stromabwärtigen Ende 38 der Differenzdruckleitung 20 ist ein Reservoir 26 ausgebildet, welches einen Fangbereich für das Kondensat und mindestens eine Öffnung 30 oder einen Schlitz 32 aufweist. In dem Fangbereich kann die auskondensierte Flüssigkeit 28 gesammelt werden, sodass diese nicht unkontrolliert in den Abgaskanal 18 tropft. Das Reservoir 26 ragt dabei in den Abgaskanal 20 um ein Aufheizen und Verdampfen der in dem Reservoir 26 aufgenommenen Flüssigkeit 28 zu begünstigen. Der Schlitz 32 oder die Öffnung 30 sind dabei so angeordnet, dass der Druck in dem Abgaskanalsegment bestimmt werden kann. Ferner ist der Schlitz 32 oder die Öffnung so angeordnet, dass die Flüssigkeit 28 aus dem Fangbereich entgegen der Schwerkraft aufsteigen muss, um aus dem Reservoir in den Abgaskanal 18 auszutreten, sodass ein unkontrolliertes Tropfen des Kondensats in den Abgaskanal 18 vermieden wird. An dem Reservoir 26 ist eine Abrisskante 34 ausgebildet, um eine Vermischung des verdampften Kondensats mit dem Abgas zu begünstigen und zu verhindern, dass sich größere Mengen des Kondensats an der Wand 36 des Abgaskanals 18 sammeln und dort und ungünstigen Betriebszuständen wieder kondensieren können.

Figur 4 zeigt ein weiteres Ausführungsbeispiels einer erfindungsgemäßen Abgasanlage 12, wobei aus Gründen der Übersichtlichkeit lediglich der Abschnitt 24 stromabwärts des Partikelfilters 16 dargestellt ist. An dem zweiten Abschnitt 24 des Abgaskanals 18 ist ein Anschlussstutzen 82 für die Differenzdruckleitung 20 ausgebildet. Stromabwärts des Filterkörpers 40 des Partikelfilters 16 und stromabwärts des Anschlussstutzens 82 ist an dem Abgaskanal 18 ein NOx-Sensor angeordnet, um die Stickoxidkonzentration stromabwärts des Partikelfilters 16 zu ermitteln und somit bei einem Partikelfilter 16 mit einer SCR-Beschichtung 66 die Funktion der Abgasnachbehandlung zu überprüfen. Alternativ oder zusätzlich kann der NOx-Sensor 50 auch genutzt werden, um die Stickoxidkonzentration stromaufwärts eines zweiten, in Figur 4 nicht dargestellten, Katalysators 76 zu ermitteln und dort eine entsprechende Menge an Reduktionsmittel in den Abgaskanal 18 einzudosieren. Der NOx-Sensor 50 ist in einem Abstand von ca. 150mm stromabwärts des Filterkörpers 40 des Partikelfilters 16 angeordnet und ermöglicht somit eine kompakte Bauweise der erfindungsgemäßen Abgasanlage 12.

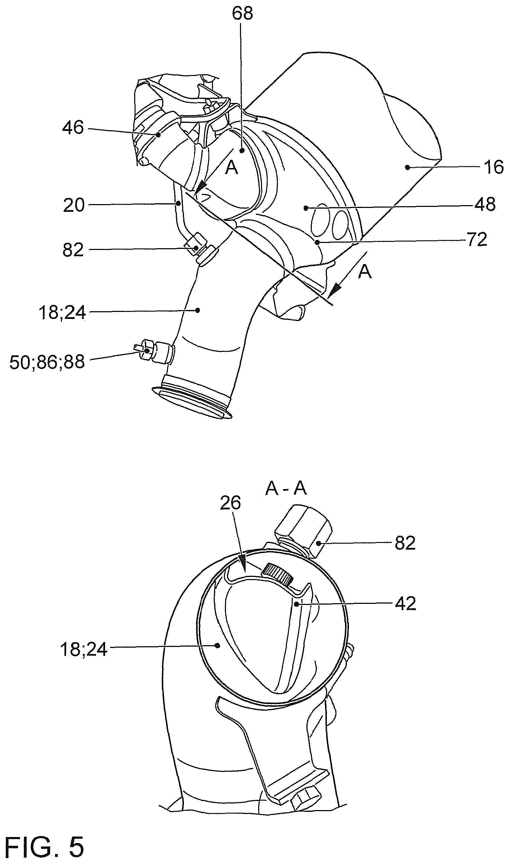

Figur 5 zeigt eine weitere Ausführungsform einer erfindungsgemäßen Abgasanlage 12. Dabei verzweigt sich der Abgaskanal 18 an dem Abgastrichter 48 in die Niederdruck-Abgasrückführung 46 und einen Hauptkanal der Abgasanlage 12, an welchem die Differenzdruckleitung 20 mittels eines Anschlussstutzens 82 befestigt ist. Dabei ist das Reservoir 26 durch ein Blech 42 ausgebildet, welches in den Abgaskanal 18 eingesetzt ist und vorzugsweise mit diesem verschraubt oder verschweißt ist.

Im Betrieb und insbesondere nach einem Betrieb der Abgasanlage 12 kann in der Differenzdruckleitung Wasserdampf und/oder Reduktionsmittel auskondensieren, welches sich in Form von Flüssigkeitstropfen an der Wand der Differenzdruckleitung ansammelt und unter dem Einfluss der Schwerkraft in dem Reservoir 26 ansammelt. Dabei kann das Kondensat bei kalten Umgebungstemperaturen und nach Abstellen des Verbrennungsmotors 10 gegebenenfalls auch einfrieren. Durch den Fangbereich des Reservoirs 26 wird vermieden, dass flüssige Kondensattropfen oder Eis in den Abgaskanal 18 stromabwärts des Partikelfilters 16 eindringen und dort zu Beschädigungen, insbesondere zu einer Beschädigung des unmittelbar stromabwärts des Reservoirs 26 angeordneten NOx-Sensors 50 führen. Durch das heiße Abgas wird das im Fangbereich des Reservoirs 26 gesammelte Kondensat verdampft und gelangt dann als Dampf über die Öffnung 30 oder den Schlitz 32 in den Abgaskanal, wodurch eine mechanische Beschädigung von Bauteilen stromabwärts des Reservoirs 26 ausgeschlossen wird. Das Reservoir 26 kann kostengünstig als einteiliges Stanz-Biegeteil oder als Tiefziehteil hergestellt werden, es ist jedoch auch möglich, das Reservoir 26 aus mehreren Bauteilen zusammenzusetzen und dazu entsprechende Bauteile formschlüssig, kraftschlüssige oder stoffschlüssig zu verbinden.

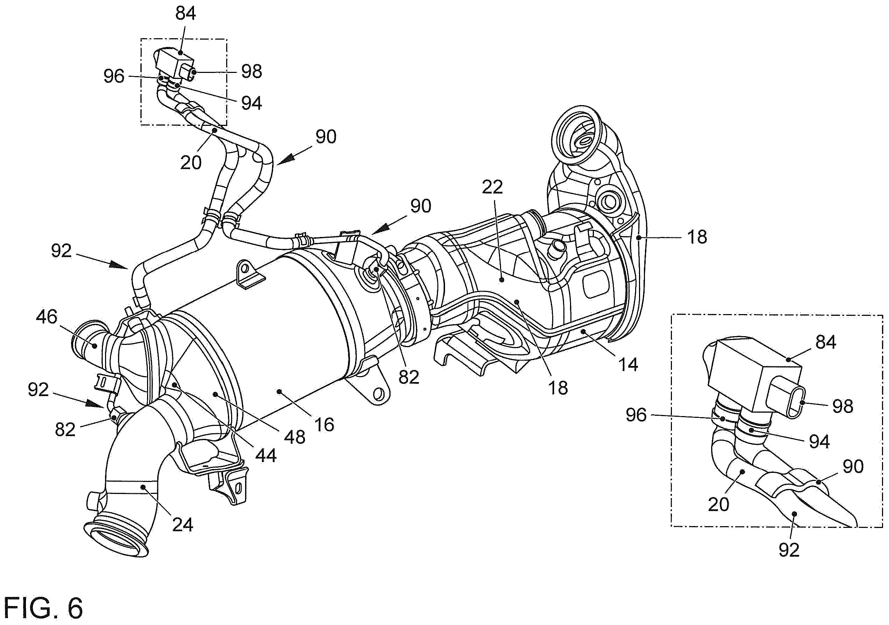

In Figur 6 ist ein weiteres Ausführungsbeispiel einer erfindungsgemäßen Abgasanlage mit einem Partikelfilter 16 dargestellt. Bei im Wesentlichen gleichem Aufbau wie zu Figur 2 ausgeführt ist in dieser Darstellung der Anschluss der Differenzdruckleitung 20 an den Abgaskanal 18 stromaufwärts und stromabwärts des Partikelfilters 16 dargestellt. Dabei verbindet ein erster Abschnitt 90 der Differenzdruckleitung 20 den ersten Abschnitt 22 des Abgaskanals 18 mit einem ersten Eingang 94 des Differenzdrucksensors 84. Ein zweiter Abschnitt 92 der Differenzdruckleitung 20 verbindet den zweiten Abschnitt 24 des Abgaskanals 18 stromabwärts des Partikelfilters 16 mit einem zweiten Eingang 96 des Differenzdrucksensors 84. Dadurch kann eine Druckdifferenz im Abgaskanal 18 vor und nach dem Partikelfilter 16 ermittelt werden, welche als Maß für die Beladung des Partikelfilters 16 dient. An dem Differenzdrucksensor 84 ist ferner eine elektrische Kontaktierung 98 vorgesehen, um das Drucksignal des Differenzdrucksensors 84 an das Steuergerät 58 zu übermitteln.

### Bezugszeichenliste

- 10: Verbrennungsmotor
- 12: Abgasanlage
- 14: erster Katalysator
- 16: Partikelfilter
- 18: Abgaskanal

- 20: Differenzdruckleitung
- 22: erster Abschnitt des Abgaskanals
- 24: zweiter Abschnitt des Abgaskanals
- 26: Reservoir
- 28: Flüssigkeit

- 30: Öffnung
- 32: Schlitz
- 34: Abrisskante
- 36: Wand
- 38: stromabwärtiges Ende des Differenzdruckleitung

- 40: Filterkörper
- 42: Blech
- 44: Verzweigung
- 46: Niederdruck-Abgasrückführung
- 48: Abgastrichter

- 50: NOx-Sensor
- 52: Auslass
- 54: Abgasturbolader
- 56: Turbine
- 58: Steuergerät
- 60: Dosiermodul
- 62: Reduktionsmitteltank
- 64: Reduktionsmittel
- 66: SCR-Beschichtung
- 68: zweiter Trichter

- 70: Filterelement
- 72: dritter Trichter
- 74: Abgasklappe
- 76: weiterer Katalysator
- 78: Endrohr

- 80: Abgasmischer
- 82: Anschlussstutzen
- 84: Differenzdrucksensor
- 86: Temperatursensor
- 88: Partikelsensor

- 90: erster Abschnitt der Differenzdruckleitung
- 92: zweiter Abschnitt der Differenzdruckleitung
- 94: erster Eingang des Differenzdrucksensors
- 96: zweiter Eingang des Differenzdrucksensors
- 98: elektrische Kontaktierung

- D: Abstand

## Patentansprüche

1. Abgasanlage (12) für einen Verbrennungsmotor (10), mit einem Abgaskanal (18), in dem ein Partikelfilter (16) angeordnet ist, sowie mit einer Differenzdruckleitung (20), wobei die Differenzdruckleitung (20) einen ersten Abschnitt (90) aufweist, welcher den Abgaskanal (18) stromaufwärts des Partikelfilters (16) mit einem Differenzdrucksensor (84) verbindet, und wobei die Differenzdruckleitung (20) einen zweiten Abschnitt (92) aufweist, welcher den Abgaskanal (18) stromabwärts des Partikelfilters (16) mit dem Differenzdrucksensor (84) verbindet, wobei an einem dem Abgaskanal (18) zugewandten Ende (38) des ersten Abschnitts (90) und/oder des zweiten Abschnitts (92) der Differenzdruckleitung (20) ein mit dem Abgaskanal (18) fluidisch verbundenes Reservoir (26) ausgebildet ist, welches in den Abgaskanal (18) ragt, wobei das Reservoir (26) durch das Abgas des Verbrennungsmotors (10) derart beheizbar ist, dass im Reservoir (26) gesammelte Flüssigkeit (28) vor dem Austritt in den Abgaskanal (18) verdampft und gasförmig in den Abgaskanal (18) eingebracht wird, **dadurch gekennzeichnet, dass** an dem Reservoir (26) ein Fangbereich für das Kondensat und mindestens eine Öffnung (30) oder ein Schlitz (32) zur kontrollierten Abgabe der im Reservoir (26) gesammelten Flüssigkeit (28) in den Abgaskanal (18) ausgebildet sind, wobei die Öffnung (30) oder der Schlitz (32) geodätisch oberhalb eines verschlossenen Endes des Reservoirs (26) liegt und die im Reservoir (26) aufgefangene Flüssigkeit entgegen der Schwerkraft aufsteigen muss, um aus dem Reservoir (26) in den Abgaskanal (18) auszutreten, sodass ein unkontrolliertes Tropfen des Kondensats in den Abgaskanal (18) vermieden wird.

2. Abgasanlage (12) nach Anspruch 1, **dadurch gekennzeichnet, dass** in der Abgasanlage (12) stromabwärts des Reservoirs (26) ein NOx-Sensor (50) zur Bestimmung der Stickoxidkonzentration im Abgaskanal (18), ein Temperatursensor (86) oder ein Partikelsensor (88) angeordnet ist.

3. Abgasanlage (12) nach einem der Ansprüche 1 oder 2, **dadurch gekennzeichnet, dass** an dem Reservoir eine Abrisskante (34) ausgebildet ist, welche ein Anliegen eines Volumenstroms der aus dem Reservoir (26) an einer Wand (36) des Abgaskanals (18) verhindert.

4. Abgasanlage (12) nach einem der Ansprüche 1 bis 3, **dadurch gekennzeichnet, dass** das stromabwärtige Ende (38) der Differenzdruckleitung (20) in einen Abgastrichter (48) unmittelbar stromabwärts eines Filterkörpers (40) des Partikelfilters (16) mündet.

5. Abgasanlage (12) nach einem der Ansprüche 1 bis 4, **dadurch gekennzeichnet, dass** die Differenzdruckleitung (20) stromaufwärts einer Verzweigung (44) für eine Niederdruck-Abgasrückführung (46) aus dem Abgaskanal (18) abzweigt und stromabwärts der Verzweigung (44) für die Niederdruck-Abgasrückführung (46) wieder in den Abgaskanal (18) einmündet.

6. Abgasanlage (12) nach einem der Ansprüche 1 bis 5, **dadurch gekennzeichnet, dass** das Reservoir (26) durch ein Blech (42), ein Gussteil, ein Drehteil oder ein Frästeil ausgebildet ist.

7. Abgasanlage (12) nach Anspruch 6, **dadurch gekennzeichnet, dass** das Blech (42), das Gussteil, das Drehteil oder das Frästeil in den Abgaskanal (18) eingeschraubt ist.

8. Abgasanlage (12) nach Anspruch 6, **dadurch gekennzeichnet, dass** das Blech (42), das Gussteil, das Drehteil oder das Frästeil formschlüssig und/oder kraftschlüssig mit der Differenzdruckleitung (20) verbunden ist.

9. Abgasanlage (12) nach einen der Ansprüche 2 bis 8, **dadurch gekennzeichnet, dass** der NOx-Sensor (50), der Temperatursensor (86) oder der Partikelsensor (88) in einem Abstand (D) von 120mm bis 1500mm stromabwärts des Filterkörpers (40) des Partikelfilters (16) angeordnet ist.

10. Verfahren zur Abgasnachbehandlung eines Verbrennungsmotors (10), wobei das Abgas des Verbrennungsmotors (10) durch eine Abgasanlage (12) mit einem Abgaskanal (18) geleitet wird, wobei das Abgas des Verbrennungsmotors (10) durch einen Partikelfilter (16) gereinigt wird, wobei an der Abgasanlage (12) eine Differenzdruckleitung (20) vorgesehen ist, wobei die Differenzdruckleitung (20) einen ersten Abschnitt (90) aufweist, welcher den Abgaskanal (18) stromaufwärts des Partikelfilters (16) mit einem Differenzdrucksensor (84) verbindet, und wobei die Differenzdruckleitung (20) einen zweiten Abschnitt (92) aufweist, welcher den Abgaskanal (18) stromabwärts des Partikelfilters (16) mit dem Differenzdrucksensor (84) verbindet, wobei an einem dem Abgaskanal (18) zugewandten Ende (38) des ersten Abschnitts (90) und/oder des zweiten Abschnitts (92) der Differenzdruckleitung (20) ein mit dem Abgaskanal (18) fluidisch verbundenes Reservoir (26) ausgebildet ist, welches in den Abgaskanal (18) ragt, wobei das Reservoir (26) durch das Abgas des Verbrennungsmotors (10) derart beheizt wird, dass eine im Reservoir (26) gesammelte Flüssigkeit (28) vor dem Austritt in den Abgaskanal (18) verdampft und gasförmig in den Abgaskanal (18) eingebracht wird, **dadurch gekennzeichnet, dass** an dem Reservoir (26) ein Fangbereich für das Kondensat und mindestens eine Öffnung (30) oder ein Schlitz (32) zur kontrollierten Abgabe der im Reservoir (26) gesammelten Flüssigkeit (28) in den Abgaskanal (18) ausgebildet sind, wobei die Öffnung (30) oder der Schlitz (32) geodätisch oberhalb eines verschlossenen Endes des Reservoirs (26) liegt und die im Reservoir (26) aufgefangene Flüssigkeit entgegen der Schwerkraft aufsteigen muss, um aus dem Reservoir (26) in den Abgaskanal (18) auszutreten, sodass ein unkontrolliertes Tropfen des Kondensats in den Abgaskanal (18) vermieden wird.

## Claims

1. Exhaust system (12) for an internal combustion engine (10), having an exhaust duct (18), in which a particle filter (16) is arranged, and having a differential pressure line (20), wherein the differential pressure line (20) has a first section (90) which connects the exhaust duct (18) upstream of the particle filter (16) to a differential pressure sensor (84), and wherein the differential pressure line (20) has a second section (92) which connects the exhaust duct (18) downstream of the particle filter (16) to the differential pressure sensor (84), wherein a reservoir (26) which is fluidically connected to the exhaust duct (18) is formed at an end (38) of the first section (90) and/or of the second section (92) of the differential pressure line (20), which end faces the exhaust duct (18), wherein the reservoir (26) protrudes into the exhaust duct (18) and can be heated by the exhaust gas of the internal combustion engine (10) in such a manner that liquid (28) collected in the reservoir (26) evaporates before exiting into the exhaust duct (18) and is introduced in gaseous form into the exhaust duct (18), **characterized in that** a catching region for the condensate and at least one opening (30) or slot (32) for the controlled output of the liquid (28) collected in the reservoir (26) into the exhaust duct (18) are formed on the reservoir (26), wherein the opening (30) or the slot (32) lies geodetically above a closed end of the reservoir (26) and the liquid caught in the reservoir (26) has to rise counter to gravity in order to emerge from the reservoir (26) into the exhaust duct (18), and therefore an uncontrolled dripping of the condensate into the exhaust duct (18) is avoided.

2. Exhaust system (12) according to Claim 1, **characterized in that** an NOx sensor (50) for determining the nitrogen oxide concentration in the exhaust duct (18), a temperature sensor (86) or a particle sensor (88) is arranged in the exhaust system (12) downstream of the reservoir (26).

3. Exhaust system (12) according to either of Claims 1 and 2, **characterized in that** a separation edge (34) is formed on the reservoir, the separation edge preventing a volumetric flow from the reservoir (26) from lying on a wall (36) of the exhaust duct (18).

4. Exhaust system (12) according to one of Claims 1 to 3, **characterized in that** the downstream end (38) of the differential pressure line (20) opens into an exhaust funnel (48) directly downstream of a filter body (40) of the particle filter (16).

5. Exhaust system (12) according to one of Claims 1 to 4, **characterized in that** the differential pressure line (20) branches off from the exhaust duct (18) upstream of a branch (44) for a low-pressure exhaust system (46) and opens again into the exhaust duct (18) downstream of the branch (44) for the low-pressure exhaust recirculation system (46).

6. Exhaust system (12) according to one of Claims 1 to 5, **characterized in that** the reservoir (26) is formed by a metal sheet (42), a cast part, a turned part or a milled part.

7. Exhaust system (12) according to Claim 6, **characterized in that** the metal sheet (42), the cast part, the turned part or the milled part is screwed into the exhaust duct (18).

8. Exhaust system (12) according to Claim 6, **characterized in that** the metal sheet (42), the cast part, the turned part or the milled part is connected to the differential pressure line (20) in a form-fitting and/or force-fitting manner.

9. Exhaust system (12) according to one of Claims 2 to 8, **characterized in that** the NOx sensor (50), the temperature sensor (86) or the particle sensor (88) is arranged at a distance (D) of 120 mm to 1500 mm downstream of the filter body (40) of the particle filter (16).

10. Method for the exhaust gas aftertreatment of an internal combustion engine (10), wherein the exhaust gas of the internal combustion engine (10) is conducted through an exhaust system (12) having an exhaust duct (18), wherein the exhaust gas of the internal combustion engine (10) is cleaned by a particle filter (16), wherein the exhaust system (12) is provided with a differential pressure line (20), wherein the differential pressure line (20) has a first section (90) which connects the exhaust duct (18) upstream of the particle filter (16) to a differential pressure sensor (84), and wherein the differential pressure line (20) has a second section (92) which connects the exhaust duct (18) downstream of the particle filter (16) to the differential pressure sensor (84), wherein a reservoir (26) which is fluidically connected to the exhaust duct (18) and protrudes into the exhaust duct (18) is formed at an end (38) of the first section (90) and/or of the second section (92) of the differential pressure line (20), said end facing the exhaust duct (18), wherein the reservoir (26) is heated by the exhaust gas of the internal combustion engine (10) in such a manner that a liquid (28) collected in the reservoir (26) is evaporated before exiting into the exhaust duct (18) and is introduced in gaseous form into the exhaust duct (18), **characterized in that** a catching region for the condensate and at least one opening (30) or slot (32) for the controlled output of the liquid (28) collected in the reservoir (26) into the exhaust duct (18) are formed on the reservoir (26), wherein the opening (30) or the slot (32) lies geodetically above a closed end of the reservoir (26) and the liquid caught in the reservoir (26) has to rise counter to gravity in order to emerge from the reservoir (26) into the exhaust duct (18), and therefore an uncontrolled dripping of the condensate into the exhaust duct (18) is avoided.

## Revendications

1. Système d'échappement (12) pour un moteur à combustion interne (10), muni d'un canal de gaz d'échappement (18), dans lequel un filtre à particules (16) est agencé, ainsi que muni d'une conduite à pression différentielle (20), la conduite à pression différentielle (20) comprenant une première section (90), qui relie le canal de gaz d'échappement (18) en amont du filtre à particules (16) avec un capteur de pression différentielle (84), et la conduite à pression différentielle (20) comprenant une deuxième section (92), qui relie le canal de gaz d'échappement (18) en aval du filtre à particules (16) avec le capteur de pression différentielle (84) ; à une extrémité (38), tournée vers le canal de gaz d'échappement (18), de la première section (90) et/ou de la deuxième section (92) de la conduite à pression différentielle (20), un réservoir (26) relié fluidiquement avec le canal de gaz d'échappement (18) étant formé, qui dépasse dans le canal de gaz d'échappement (18), le réservoir (26) pouvant être chauffé par le gaz d'échappement du moteur à combustion interne (10) de telle sorte que du liquide (28) collecté dans le réservoir (26) se vaporise avant la sortie dans le canal de gaz d'échappement (18) et soit introduit sous forme gazeuse dans le canal de gaz d'échappement (18), **caractérisé en ce qu'**une zone de captage pour le condensat et au moins une ouverture (30) ou une fente (32) pour le déchargement contrôlé du liquide (28) collecté dans le réservoir (26) dans le canal de gaz d'échappement (18) sont formées sur le réservoir (26), l'ouverture (30) ou la fente (32) étant située géodésiquement au-dessus d'une extrémité fermée du réservoir (26) et le liquide capté dans le réservoir (26) devant monter à l'encontre de la force de pesanteur afin de sortir du réservoir (26) dans le canal de gaz d'échappement (18), de telle sorte qu'un égouttement incontrôlé du condensat dans le canal de gaz d'échappement (18) soit évité.

2. Système d'échappement (12) selon la revendication 1, **caractérisé en ce qu'**un capteur de NOx (50) pour la détermination de la concentration en oxydes d'azote dans le canal de gaz d'échappement (18), un capteur de température (86) ou un capteur de particules (88) est agencé dans le système d'échappement (12) en aval du réservoir (26).

3. Système d'échappement (12) selon l'une quelconque des revendications 1 ou 2, **caractérisé en ce qu'**un bord de cassure (34) est formé sur le réservoir, qui empêche un flux volumique du réservoir (26) d'entrer en contact avec une paroi (36) du canal de gaz d'échappement (18).

4. Système d'échappement (12) selon l'une quelconque des revendications 1 à 3, **caractérisé en ce que** l'extrémité aval (38) de la conduite à pression différentielle (20) débouche dans un cône d'échappement (48) directement en aval d'un corps de filtre (40) du filtre à particules (16).

5. Système d'échappement (12) selon l'une quelconque des revendications 1 à 4, **caractérisé en ce que** la conduite à pression différentielle (20) bifurque hors du canal de gaz d'échappement (18) en amont d'une ramification (44) pour un recyclage de gaz d'échappement basse pression (46) et débouche de nouveau dans le canal de gaz d'échappement (18) en aval de la ramification (44) pour le recyclage de gaz d'échappement basse pression (46).

6. Système d'échappement (12) selon l'une quelconque des revendications 1 à 5, **caractérisé en ce que** le réservoir (26) est formé par une tôle (42), une partie coulée, une partie tournée ou une partie fraisée.

7. Système d'échappement (12) la revendication 6, **caractérisé en ce que** la tôle (42), la partie coulée, la partie tournée ou la partie fraisée est vissée dans le canal de gaz d'échappement (18).

8. Système d'échappement (12) selon la revendication 6, **caractérisé en ce que** la tôle (42), la partie coulée, la partie tournée ou la partie fraisée est reliée par accouplement de forme et/ou par accouplement de force avec la conduite à pression différentielle (20) .

9. Système d'échappement (12) selon l'une quelconque des revendications 2 à 8, **caractérisé en ce que** le capteur de NOx (50), le capteur de température (86) ou le capteur de particules (88) est agencé à une distance (D) de 120 mm à 1 500 mm en aval du corps de filtre (40) du filtre à particules (16).

10. Procédé de post-traitement de gaz d'échappement d'un moteur à combustion interne (10), le gaz d'échappement du moteur à combustion interne (10) étant acheminé à travers un système d'échappement (12) muni d'un canal de gaz d'échappement (18), le gaz d'échappement du moteur à combustion interne (10) étant purifié par un filtre à particules (16), une conduite à pression différentielle (20) étant prévue sur le système d'échappement (12), la conduite à pression différentielle (20) comprenant une première section (90), qui relie le canal de gaz d'échappement (18) en amont du filtre à particules (16) avec un capteur de pression différentielle (84), et la conduite à pression différentielle (20) comprenant une deuxième section (92), qui relie le canal de gaz d'échappement (18) en aval du filtre à particules (16) avec le capteur de pression différentielle (84) ; à une extrémité (38), tournée vers le canal de gaz d'échappement (18), de la première section (90) et/ou de la deuxième section (92) de la conduite à pression différentielle (20), un réservoir (26) relié fluidiquement avec le canal de gaz d'échappement (18) étant formé, qui dépasse dans le canal de gaz d'échappement (18), le réservoir (26) pouvant être chauffé par le gaz d'échappement du moteur à combustion interne (10) de telle sorte que du liquide (28) collecté dans le réservoir (26) se vaporise avant la sortie dans le canal de gaz d'échappement (18) et soit introduit sous forme gazeuse dans le canal de gaz d'échappement (18), **caractérisé en ce qu'**une zone de captage pour le condensat et au moins une ouverture (30) ou une fente (32) pour le déchargement contrôlé du liquide (28) collecté dans le réservoir (26) dans le canal de gaz d'échappement (18) sont formées sur le réservoir (26), l'ouverture (30) ou la fente (32) étant située géodésiquement au-dessus d'une extrémité fermée du réservoir (26) et le liquide capté dans le réservoir (26) devant monter à l'encontre de la force de pesanteur afin de sortir du réservoir (26) dans le canal de gaz d'échappement (18), de telle sorte qu'un égouttement incontrôlé du condensat dans le canal de gaz d'échappement (18) soit évité.
